# FASCICULE DE BREVET EUROPEEN

(11) **EP 0 718 146 B1**
(45) Date de publication et mention de la délivrance du brevet: **23.09.1998**
(21) Numéro de dépôt: 95402800.7
(22) Date de dépôt: 12.12.1995
(51) Int. Cl.: B60N 2/36

(54) **Siège articulé à garniture mobile pour véhicule terrestre**
Gelenkiger Sitz mit beweglicher Polsterung für Landfahrzeuge
Tiltable seat with movable padding for land vehicles

(30) Priorité: 19.12.1994 FR 9415263
(43) Date de publication de la demande: 26.06.1996
(73) Titulaire: CESA COMPAGNIE EUROPEENNE DE SIEGES POUR AUTOMOBILES, 92307 Levallois-Perret Cédex (FR)
(72) Inventeur: Degorce, Gilles, F-4520 Montargis (FR); Fourrey, François, F-4520 Montargis (FR)
(74) Mandataire: Moncheny, Michel

(56) Documents cités:
- EP-A- 0 069 645
- EP-A- 0 459 839
- NL-A- 9 000 859
- US-A- 4 191 417
- US-A- 4 932 709
- US-A- 4 979 772

## Description

La présente invention concerne les sièges et leurs garnitures et, plus particulièrement, ceux articulés destinés à être placés à bord des véhicules par exemple automobiles terrestres.

Dans de nombreux secteurs techniques on utilise des sièges, mono ou multiplaces, articulés de manière à ce qu'on puisse notamment rabattre le dossier contre l'assise. Cette situation se rencontre dans l'industrie automobile qui produit des véhicules dont l'un au moins des sièges, mono ou multiplaces, est très souvent rabattable pour permettre une augmentation des capacités de chargement.

Les sièges articulés rabattables actuellement utilisés se répartissent entre deux grandes familles, fonction des cinématiques utilisées. L'une de ces familles utilise un rabattement dit en "porte-feuille" selon lequel on replie d'abord le dossier contre l'assise puis, ensuite, on redresse le tout, dossier et assise, contre le dossier du ou des sièges qui le précèdent de manière à libérer une surface supplémentaire de plancher qui était antérieurement occupée par le siège et qui prolonge le plancher. L'autre de ces familles utilise un rabattement selon lequel on redresse d'abord l'assise seule contre le dossier du siège qui le précède puis, ensuite on retourne le dossier pour le placer à l'endroit qu'occupait antérieurement l'assise de manière que le fond du dossier fasse alors office de prolongement du plancher.

Ces solutions s'appliquent couramment aux sièges multiplaces arrière d'un seul tenant ou à ceux d'entre eux qui sont divisés transversalement en approximativement 1/3-2/3.

Habituellement, un tel rabattement se fait selon un ou des axes parallèles à une direction donnée qui est le plus souvent transversale à la direction longitudinale du véhicule.

Quelle que soit la famille à laquelle appartiennent des sièges de ce type, ils conduisent en général à des solutions onéreuses. En effet les structures de l'assise et du dossier doivent être conçues pour résister aux manipulations, et aussi résister aux effets dus aux charges ou autres bagages placés sur le plancher ou son prolongement, qu'ils exercent des efforts verticaux, statiques, ou à composantes horizontales, dynamiques, en cas de choc frontal par exemple. Ces solutions font aussi appel à de multiples articulations, quel qu'en soit le type, en particulier dans le cas de sièges divisés en 1/3-2/3.

Outre les difficultés rappelées précédemment, les solutions actuelles présentent des inconvénients lorsque les sièges sont équipés de repose-têtes ou d'appuis-tête comme cela est de plus en plus courant. En effet les repose-têtes constituent un obstacle au rabattement et, de plus ne trouvent pas de place où se loger, ce qui conduit soit simplement à devoir les enlever avant de pouvoir opérer un rabattement, ou soit à concevoir des mécanismes complexes pour permettre de les éclipser.

Les sièges arrière d'un véhicule du type dit "berline" ou du type dit "break", reposent normalement sur un plancher en "gradin" avec un niveau bas sur lequel prend habituellement appui l'assise du siège, et avec un niveau haut qui constitue le plan de chargement par exemple d'un coffre à bagage ou similaire. Lorsque dans de telles conditions le siège arrière multiplace d'un seul tenant est muni d'une assise qui est fixe relativement au plancher, le rabattement du dossier contre l'assise qui reste en place, oblige à situer l'axe de basculement du dossier relativement haut par rapport au niveau haut du plancher, pour tenir compte de l'encombrement des coussins de l'assise et du dossier qui sont en vis à vis. Il en résulte alors un ressaut notable entre, d'une part, le plan de chargement qui constitue le niveau haut du plancher et, d'autre part, le fond du dossier qui le prolonge.

Le but de l'invention est de supprimer le maximum des inconvénients rappelés brièvement auparavant à l'aide d'un siège avec un dossier articulé qui, lorsqu'il est rabattu contre l'assise, est apte à procurer une surface de chargement étendue, continue et sans ressaut, pratiquement sans solution de continuité avec le plancher.

A cet effet, l'invention a pour objet un siège du type comprenant une assise et un dossier munis chacun d'une armature portant un coussin, une extrémité de l'armature du dossier, proche de l'assise, étant montée basculante, autour d'un axe, entre une position déployée redressée et une position repliée rabattue contre l'assise, le coussin de l'assise ou du dossier étant relié à l'armature qui le porte de façon mobile et repliable, ce coussin repliable comprenant un tronçon libre relié par une articulation médiane à un tronçon intermédiaire, ce tronçon intermédiaire étant relié à une extrémité de l'armature portant le coussin repliable, éloignée de l'axe de basculement, par une articulation extrême, les deux articulations médiane et extrême étant pratiquement parallèles à l'axe de basculement, de manière qu'après repliage du coussin moyennant les articulations médiane et extrême et rabattement du dossier contre l'assise, l'armature à laquelle est relié le coussin replié soit plaquée contre l'autre coussin du dossier ou de l'assise.

L'invention a aussi pour objet un agencement d'un siège tel que défini ci-dessus dans un véhicule automobile terrestre comportant un plancher en gradin présentant un niveau bas et un niveau haut, le siège étant porté par ce plancher, l'assise étant portée par le niveau bas du plancher de manière qu'après repliage du coussin et rabattement du dossier contre l'assise, le fond de l'armature portant le coussin repliable soit pratiquement dans l'alignement du niveau haut du plancher.

D'autres caractéristiques de l'invention apparaîtront à la lecture de la description et des revendications qui suivent ainsi qu'à l'examen du dessin annexé, donné seulement à titre d'exemple, où :
La figure 1 est une vue perpective schématique d'un siège avant et d'un siège arrière selon l'invention dans leur application à un véhicule automobile terrestre, où ils sont illustrés avec le dossier en position déployée redressée;
La figure 2 est une vue analogue à celle de la Fig. 1 où le dossier est en position repliée rabattue contre l'assise;
La figure 3 est une vue analogue, pour partie, à celle de la figure 2, d'un siège arrière multiplace d'un seul tenant;
La figure 4 est une élévation longitudinale schématique de la Fig.2, et
La figure 5 est une section schématique d'un détail de réalisation d'un siège selon l'invention.

Les sièges articulés et, en particulier, ceux qui sont placés à bord des véhicules notamment automobiles terrestres étant bien connus dans la technique, on ne décrira dans ce qui suit que ce qui concerne directement ou indirectement l'invention. Pour le surplus, l'Homme du Métier du secteur technique considéré puisera dans les solutions classiques courantes à sa disposition pour faire face aux problèmes particuliers auxquels il est confronté.

Dans ce qui suit on utilise toujours un même numéro de référence pour identifier un élément homologue quel que soit le mode de réalisation ou sa variante d'exécution.

Pour la commodité de l'exposé on décrira successivement chacun des constituants d'un siège selon l'invention avant d'en exposer la fabrication au besoin, et la mise en oeuvre.

Dans ce qui suit on décrira un siège selon l'invention agencé dans un véhicule automobile terrestre. Il est clair que cette application particulière du siège n'est pas la seule englobée par l'invention.

Comme on le sait un plancher P de véhicule automobile terrestre est généralement, pour diverses raisons, localement en forme de gradin en coupe longitudinale repérée selon l'axe du véhicule, avec un niveau haut H et un niveau bas B, en particulier dans la zone arrière d'un véhicule dit "berline" ou "break". Le niveau haut sert habituellement de plan de chargement pour un coffre ou similaire, et le niveau bas est habituellement apte à recevoir directement ou par l'entremise de glissières notamment l'assise d'un siège.

Un siège 10 selon l'invention comprend, essentiellement, une assise 11, un dossier 12, le cas échéant un appui-tête 14, au moins un coussin 20, des moyens de retenue 30 et un dispositif de centrage 40.

L'un au moins de ces assise 11 et dossier 12, comprend une armature 100, approximativement en quadrilatère. Cette armature 100 mécanosoudée faite à partir de tubes métalliques ou autres, est délimitée par deux montants 101 latéraux, deux traverses 102 opposées qui relient les montants et un fond 103 par exemple fait d'une tôle ou autre fixée aux montants et traverses. L'armature 100, grosso modo en forme de cadre, du dossier 12 est munie d'un axe 13 de basculement qui est proche de l'une des traverses 102 et parallèle à une direction Δ donnée. Cette traverse 102 du dossier est habituellement celle qui est voisine de l'assise. Grâce à cet axe de basculement, on peut déplacer le dossier entre une position déployée redressée et une position repliée rabattue contre l'assise. Une telle armature est très plate et prend peu de place en épaisseur.

Cet axe de basculement qui permet au dossier de se déplacer relativement au plancher, relie l'armature du dossier à volonté soit au plancher soit à l'armature de l'assise.

Tout ceci est classique et on ne s'y étendra pas plus amplement. Un exemple d'une telle solution est exposé notamment dans le document FR-A-2 629 767 auquel on se reportera utilement.

L'une au moins de ces armatures 100 d'assise 11 et de dossier 12, est munie d'une coussin 20. Un tel coussin 20 comprend, habituellement un revêtement 201 externe ou coiffe en tissu ou autre, et un rembourrage 202 interne ou matelassure le plus souvent en mousse par exemple en polyuréthane comme il est classique. Le revêtement 201 a une face 2011 portante destinée à recevoir un occupant, et une face 2012 opposée. Un tel coussin est, habituellement, monté sur l'armature à l'aide de ressorts par exemple en forme d'une nappe ou treillis de fils métalliques élastiques.

Tout ceci est classique et on ne s'y étendra pas plus amplement. Un exemple d'une telle solution est exposé notamment dans le document FR-A-2 669 815 auquel on se reportera utilement.

Selon l'invention, un coussin 20 est mobile et comprend au moins deux tronçons 21 successifs, un tronçon libre 211 et au moins un tronçon 212 intermédiaire, ainsi qu'au moins deux articulations 22 qui sont pratiquement parallèles entre elles et à la direction Δ, et dont l'une 221 médiane relie entre eux le tronçon libre 211 et le tronçon intermédiaire 212, et dont l'autre 222 extrême relie le tronçon intermédiaire 212, directement ou indirectement, à celle des traverses 102 d'une armature 100 qui est éloignée de l'axe de basculement 13.

On comprend donc que le coussin 20 est relié à l'armature qui le porte de façon mobile et repliable.

Pour tenir compte de la présence de l'appui-tête 14, de préférence le coussin 20 est muni d'un coussinet 23, intercalaire, porté par l'armature 100 et placé entre la traverse 102 qui est éloignée de l'axe de basculement 13 et le tronçon intermédiaire 212.

De préférence l'une au moins des articulations 22 est obtenue par un amincissement local du rembourrage 202. De la sorte, l'articulation 22 est assurée par le revêtement 201 qui sert en quelque sorte de charnière ou similaire. Le cas échéant, pour tenir compte de l'existence sur les coussins de bourrelets latéraux, on ménage un ajour 223 par exemple en fente, qui divise l'une au moins des articulations 22 et de préférence l'articulation médiane 221, en deux éléments marginaux.

Les moyens de retenue 30 servent à maintenir le coussin 20 contre l'armature 100 et au besoin son fond 103, quand le dossier 12 est en position déployée redressée. Ces moyens de retenue 30 sont par exemple des boutons pressions, une bande auto-agrippante connue dans le commerce sous la désignation VELCRO, des aimants au besoin noyés dans une résine pour former une bande, des pinces élastiques en forme de lyre ou de oméga ou tous autres moyens similaires. Ces moyens de retenue le cas échéant incorporés au rembourrage, coopèrent par exemple avec les montants et/ou les traverses voire le fond de l'armature. Un exemple de solution est exposé notamment dans le document FR-A-2 412 736 auquel on se reportera utilement.

Le dispositif de centrage 40 permet d'orienter le coussin 20 relativement à l'armature 100 et de bien le placer par rapport à celle-ci quand le dossier 12 est en position déployée redressée, afin que le coussin reste en place et, aussi afin de faciliter la repose du coussin contre l'armature par exemple par emboîtement entre et/ou contre les montants et/ou traverses, comme on le comprendra par la suite. Ce dispositif de centrage est, par exemple, du type à coopération de formes conjuguées male et femelle tel que, par exemple, un logement qui vient chevaucher un montant latéral ou bien des picots, tétons ou analogues qui s'engagent dans des trous ou similaires correspondant. Ou bien plus simplement le coussin vient se loger entre les montants latéraux. Un exemple de solution est exposé notamment dans le document FR-A-2 626 867 auquel on se reportera utilement.

Tous les constituants d'un siège selon l'invention sont réunis, assemblés et montés comme cela ressort clairement des figures du dessin.

On exposera maintenant la mise en oeuvre d'un siège selon l'invention.

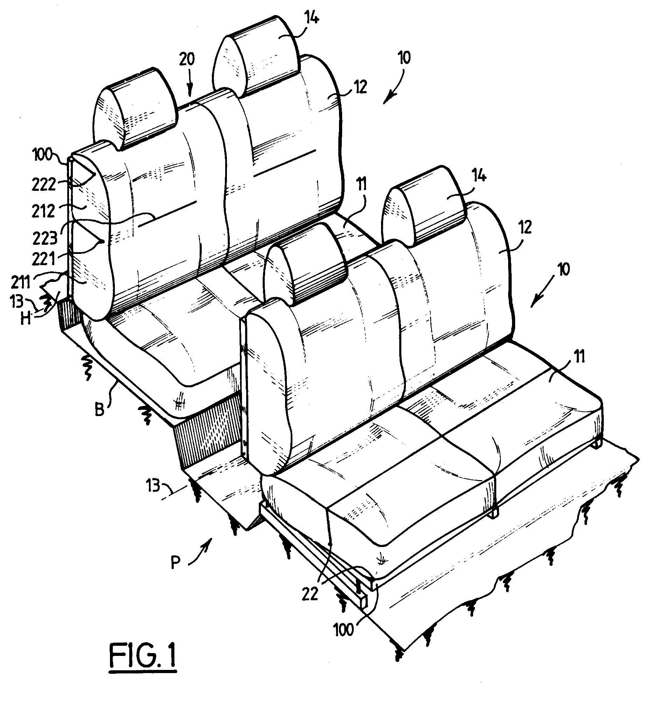

On supposera qu'initialement un siège est disposé comme illustré sur la figure 1 où le dossier est en position déployée redressée dans laquelle le siège est apte à recevoir un occupant.

On sépare alors le coussin de l'armature en saisissant d'abord le tronçon libre que l'on bascule selon l'articulation médiane et replie de manière à l'appliquer contre le tronçon intermédiaire. On saisit alors les tronçons libre et intermédiaire afin de les écarter de l'armature et on les tourne ensemble selon l'articulation extrême pour leur donner une orientation approximativement à l'équerre relativement à l'armature du dossier. On peut alors rabattre l'armature du dossier selon son axe de basculement en maintenant les deux tronçons du coussin dans cette orientation, afin qu'elle prenne appui contre l'assise. On voit alors que, d'une part, le fond du dossier vient se placer dans le prolongement du niveau haut du plancher pour en augmenter la surface utile et cela pratiquement sans ressaut et que, d'autre part, les tronçons du coussin repliés l'un contre l'autre viennent se loger devant l'assise en prenant appui contre le plancher, notamment par les tranches normalement en vis-à-vis de chacun des deux tronçons qui sont placées dans l'épaisseur du coussin et qui sont situées au niveau de l'articulation médiane. En effet, l'armature du dossier dont la configuration est extra-plate repose alors sur le coussin de l'assise.

Ainsi, après repliage du coussin 20 et rabattement du dossier 12 contre l'assise 11, l'armature 100 à laquelle est relié le coussin replié est plaquée contre l'autre coussin du dossier ou de l'assise.

On observera que l'appui-tête peut rester en place sur le dossier sans qu'on ait à le déposer grâce à la position judicieusement choisie de l'articulation médiane qui permet au tronçon libre du coussin de se replier et de se placer en regard du repose-tête, dans son "épaisseur" en quelque sorte.

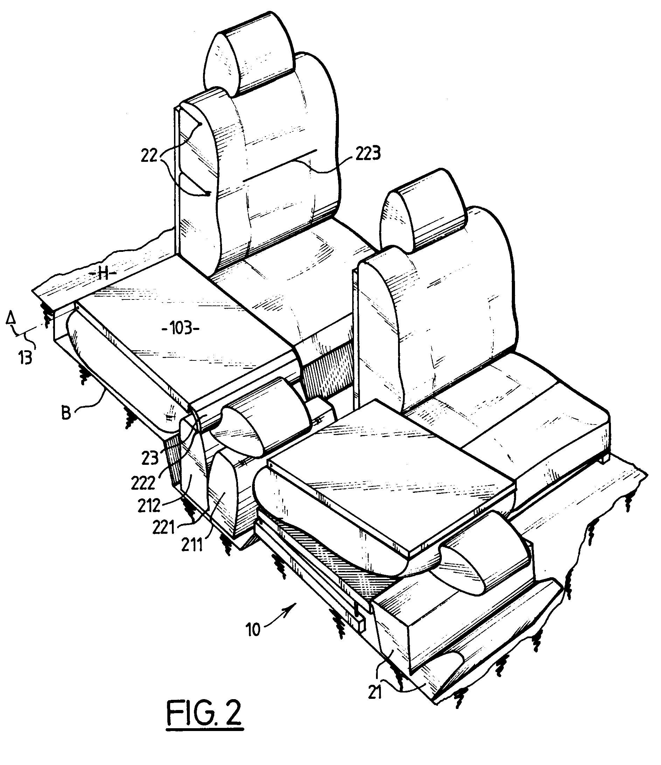

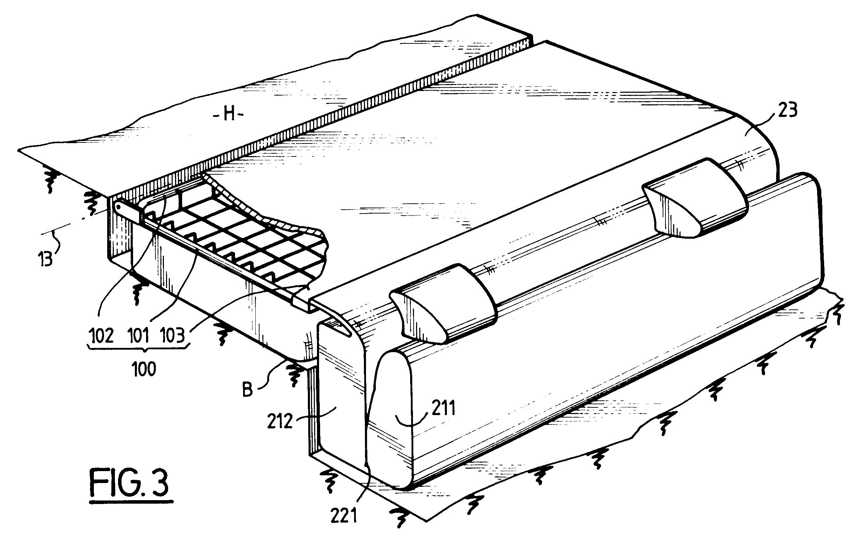

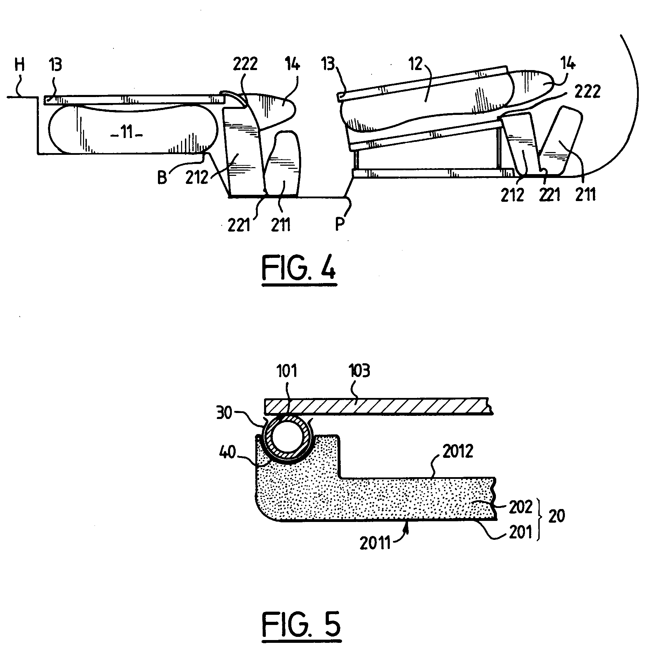

Un siège selon l'invention occupe alors sa position repliée rabattue, comme illustré sur les figures 2, 3 et 4.

S'il y a lieu, pour faciliter la désolidarisation du coussin de l'armature, on dispose d'une poignée par exemple sous forme d'une sangle souple ou d'une échancrure, associée de préférence au tronçon libre du coussin.

Pour replacer le siège illustré sur les figures 2, 3 et 4 dans sa position déployée redressée de la figure 1, il suffit de relever le dossier puis de déployer les deux tronçons du coussin. Le dispositif de centrage lui permet de reprendre une position correcte par rapport à l'armature et les moyens de retenue le maintiennent en position contre l'armature.

Il est clair que les moyens de retenue et le dispositif de centrage peuvent être réunis en un même sous-ensemble. De même les moyens de retenue peuvent être constitués simplement par l'action de la pesanteur.

Ce qui a été exposé vaut aussi bien à propos d'un siège arrière que d'un siège avant. Il suffit d'apporter à l'invention les modifications et transpositions nécessaires. En particulier on voit que dans le cas d'un siège avant on peut indifféremment confectionner le coussin du dossier ou le coussin de l'assise conformément à l'invention. Lorsque c'est le coussin de l'assise qui est confectionné selon l'invention on munit, s'il y a lieu, les tranches des tronçons situées au niveau de l'articulation médiane, d'organes de fermeture qui maintiennent au contact ou favorisent ce contact des tranches des tronçons du coussin, lorsque le coussin est déployé contre son armature. De la sorte on évite, autant que faire se peut, que ces tranches s'écartent ou se séparent spontanément ou lorsqu'un occupant a pris place sur le siège. Ces organes sont par exemple une bande auto-agrippante VELCRO ou une bande avec des aimants. On évite ainsi que la face portante bée et offre une solution de continuité.

On observera que, qu'il s'agisse d'un siège avant ou d'un siège arrière, le dossier est toujours mobile et articulé relativement au plancher mais que dans le cas d'un siège arrière le dossier est articulé de préférence sur le plancher et que dans le cas d'un siège avant le dossier est articulé de préférence sur l'assise, comme cela est clairement illustré sur les figures du dessin.

De ce qui précède on comprend que la solution selon l'invention est simple, fiable, d'un coût modique et compatible avec les pédoncules de fixation, notamment au plancher, des boucles de ceinture de sécurité qui ne sont nullement gênants.

Ce qui précède met bien en lumière les particularités distinctives de l'invention, l'intérêt qu'elle offre et les avantages qu'elle procure.

On notera que l'invention permet, sans qu'il soit nécessaire d'articuler l'armature de l'assise, de replier le siège du véhicule dans une configuration qui prolonge une partie du plancher.

## Revendications

1. Siège du type comprenant une assise (11) et un dossier (12) munis chacun d'une armature (100) portant un coussin (20), une extrémité de l'armature (100) du dossier, proche de l'assise, étant montée basculante, autour d'un axe (13), entre une position déployée redressée et une position repliée rabattue contre l'assise (11), le coussin (20) de l'assise (11) ou du dossier (12) étant relié à l'armature qui le porte de façon mobile et repliable, ce coussin repliable comprenant un tronçon libre (211) relié par une articulation médiane (221) à un tronçon intermédiaire (212), ce tronçon intermédiaire (212) étant relié à une extrémité de l'armature portant le coussin repliable, éloignée de l'axe de basculement (13), par une articulation extrême (222), les deux articulations médiane et extrême étant pratiquement parallèles à l'axe de basculement, de manière qu'après repliage du coussin (20) moyennant les articulations médiane (221) et extrême (222) et rabattement du dossier (12) contre l'assise (11), l'armature (100) à laquelle est relié le coussin replié soit plaquée contre l'autre coussin du dossier ou de l'assise.

2. Siège selon la revendication 1, dans lequel l'armature (100) portant le coussin repliable a une forme générale en quadrilatère et est délimitée par un fond (103), deux montants (101) latéraux et deux traverses opposées (102) dont l'une est proche de l'axe (13) de basculement du dossier et l'autre éloignée de cet axe.

3. Siège selon la revendication 2, dans lequel le coussin repliable (20) comprend un coussinet (23) intercalaire porté par l'armature (100) du coussin repliable et placé entre la traverse (102) qui est éloignée de l'axe de basculement (13) et le tronçon intermédiaire (212).

4. Siège selon l'une quelconque des revendications 1 à 3, dont le coussin repliable (20) comprend un revêtement (201) externe et un rembourrage (202) interne, dans lequel l'une au moins de ces articulations (221, 222) est obtenue par un amincissement local du rembourrage (202).

5. Siège selon la revendication 4, dans lequel l'une au moins de ces articulations (22) est assurée par le revêtement (201) qui sert de charnière.

6. Siège selon l'une quelconque des revendications 1 à 5, dans lequel le coussin repliable (20) est transpercé d'un ajour (223) qui divise l'une au moins de ces articulations (221, 222) en deux éléments marginaux.

7. Siège selon l'une quelconque des revendications 1 à 6, comprenant des moyens de retenue (30) pour maintenir le coussin repliable (20) contre l'armature (100) qui le porte quand le dossier (12) est en position déployée redressée.

8. Siège selon l'une quelconque des revendications 1 à 7, comprenant un dispositif de centrage (40) pour orienter le coussin repliable (20) relativement à l'armature (100) qui le porte quand le dossier (12) est en position déployée redressée.

9. Agencement d'un siège selon l'une quelconque des revendications précédentes dans un véhicule automobile terrestre comportant un plancher (P) en gradin présentant un niveau bas (B) et un niveau haut (H), le siège étant porté par ce plancher, l'assise étant portée par le niveau bas (B) du plancher de manière qu'après repliage du coussin et rabattement du dossier (12) contre l'assise (11), le fond (103) de l'armature (100) portant le coussin repliable soit pratiquement dans l'alignement du niveau haut (H) du plancher.

10. Agencement selon la revendication 9, dans lequel le dossier (12) du siège est articulé sur le plancher et relativement à ce dernier et porte le coussin (20) repliable.

11. Agencement selon la revendication 9, dans lequel le dossier (12) du siège est articulé sur l'assise (11) et relativement au plancher (P), l'assise portant le coussin (20) repliable.

## Claims

1. Seat of the type comprising a seat base (11) and a backrest (12) each provided with a frame (100) supporting a cushion (20), one end of the frame (100) of the backrest, close to the seat base, being tiltably mounted about an axis (13) between an upright unfolded position and a folded position in which it is lowered onto the seat base (11), the cushion (20) of the seat base (11) or of the backrest (12) being attached to the frame which carries it in a movable and foldable manner, this foldable cushion comprising a free section (211) attached by a median joint (221) to an intermediate section (212), this intermediate section (212) being connected to one end of the frame carrying the foldable cushion, remote from the tilting axis (13), by an end joint (222), the two median and end joints being substantially parallel to the tilting axis, in such a way that after the cushion (20) has been folded by means of the median (221) and end (222) joints and the backrest (12) has been lowered onto the seat base (11), the frame (100) to which the folded cushion is attached is pressed against the other cushion of the backrest or of the seat base.

2. Seat according to claim 1, wherein the frame (100) carrying the foldable cushion is generally quadrilateral in shape and is bounded by a bottom part (103), two side arms (101) and two opposite crosspieces (102), one of which is close to the tilting axis (13) of the backrest while the other is remote from this axis.

3. Seat according to claim 2, wherein the foldable cushion (20) comprises an intervening pad (23) supported by the frame (100) of the foldable cushion and placed between the crosspiece (102) which is remote from the tilting axis (13) and the intermediate section (212).

4. Seat according to any one of claims 1 to 3, in which the foldable cushion (20) comprises an outer covering (201) and an inner padding (202), wherein at least one of these joints (221, 222) is obtained by local thinning of the padding (202).

5. Seat according to claim 4, wherein at least one of these joints (22) is provided by the covering (201) which acts as a hinge.

6. Seat according to any one of claims 1 to 5, wherein the foldable cushion (20) is pierced with an opening (223) which divides at least one of these joints (221, 222) into two marginal elements.

7. Seat according to any one of claims 1 to 6, comprising retaining means (30) for holding the foldable cushion (20) against the frame (100) which carries it when the backrest (12) is in the upright unfolded position.

8. Seat according to any one of claims 1 to 7, comprising a centring device (40) for orienting the foldable cushion (20) relative to the frame (100) which carries it when the backrest (12) is in the upright unfolded position.

9. Arrangement of a seat according to any one of the preceding claims in a land vehicle comprising a sloping floor (P) having a lower level (B) and a top level (H), the seat being supported by this floor, the seat base being supported by the lower level (B) of the floor so that, after folding of the cushion and lowering the backrest (12) on to the seat base (11), the bottom part (103) of the frame (100) carrying the foldable cushion is substantially aligned with the top level (H) of the floor.

10. Arrangement according to claim 9, wherein the backrest (12) of the seat is articulated on the floor and relative thereto and carries the foldable cushion (20).

11. Arrangement according to claim 9, wherein the backrest (12) of the seat is articulated on the seat base (11) and relative to the floor (P), the seat base carrying the foldable cushion (20).

## Patentansprüche

1. Sitz mit einem Sitzkissen (11) und einer Rückenlehne (12), die jeweils ein ein Polster (20) tragendes Gestell (100) besitzen, wobei ein dem Sitzkissen nahes Ende des Gestells (100) der Rückenlehne um eine Achse (13) zwischen einer aufgeklappten, aufgerichteten Stellung und einer zusammengeklappten, auf das Sitzkissen (11) heruntergeklappten Stellung schwenkbar montiert ist und das Polster (20) des Sitzkissens (11) oder der Rückenlehne (12) mit dem es tragenden Gestell beweglich und zusammenklappbar verbunden ist, wobei dieses zusammenklappbare Polster ein freies Teil (211) aufweist, das durch ein Mittelgelenk (221) mit einem Zwischenteil (212) verbunden ist, das mit einem von der Schwenkachse (13) entfernten Ende des das zusammenklappbare Polster tragenden Gestells über ein Außengelenk (222) verbunden ist, wobei das Mittelgelenk und das Außengelenk zur Schwenkachse praktisch parallel sind, so daß nach Zusammenklappen des Polsters (20) mit Hilfe des Mittelgelenks (221) und des Außengelenks (222) und Herunterklappen der Rückenlehne (12) auf das Sitzkissen (11) das Gestell (100), mit dem das zusammengeklappte Kissen verbunden ist, an dem anderen Polster der Rückenlehne oder der Sitzfläche anliegt.

2. Sitz nach Anspruch 1, bei dem das das zusammenklappbare Polster tragende Gestell (100) eine allgemein viereckige Form hat und durch eine Rückwand (103), zwei seitliche Träger (101) und zwei einander entgegengesetzten Querstreben (102) abgegrenzt ist, von denen eine nahe bei der Schwenkachse (13) der Rückenlehne liegt und die andere von dieser Achse entfernt ist.

3. Sitz nach Anspruch 2, bei dem das zusammenklappbare Polster (20) ein Zwischenkissenstück (23) aufweist, das von dem Gestell (100) des zusammenklappbaren Polsters getragen wird und zwischen der von der Schwenkachse entfernten Querstrebe (102) und dem Zwischenteil (212) angeordnet ist.

4. Sitz nach einem der Ansprüche 1 bis 3, dessen zusammenklappbares Polster (20) eine Außenverkleidung (201) und eine Innenpolsterung (202) aufweist und bei dem mindestens eines der Gelenke (221, 222) durch eine örtliche Verdünnung der Polsterung (202) gebildet wird.

5. Sitz nach Anspruch 4, bei dem mindestens eines der Gelenke (22) von der Verkleidung (201) gebildet wird, die als Scharnier dient.

6. Sitz nach einem der Ansprüche 1 bis 5, bei dem das zusammenklappbare Polster (20) mit einer Durchbrechung (223) versehen ist, die mindestens eines der Gelenke (221, 222) in zwei Randelemente teilt.

7. Sitz nach einem der Ansprüche 1 bis 6, der Rückhalteeinrichtungen (30) aufweist, um das zusammenklappbare Polster (20) an dem es tragenden Gestell (100) zu halten, wenn die Rückenlehne (12) in der aufgeklappten, aufgerichteten Stellung ist.

8. Sitz nach einem der Ansprüche 1 bis 7, der eine Zentriervorrichtung (40) aufweist, um das zusammenklappbare Polster (20) bezüglich des es tragenden Gestells (100) auszurichten, wenn die Rückenlehne (12) in der aufgeklappten, aufgerichteten Stellung ist.

9. Anordnung eines Sitzes nach einem der vorhergehenden Ansprüche in einem Land-Kraftfahrzeug mit einem gestuften Boden (P), der eine untere Ebene (B) und eine obere Ebene (H) aufweist, wobei der Sitz von diesem Boden getragen wird und das Sitzkissen von der unteren Ebene (B) des Bodens getragen wird, so daß die Rückwand (103) des das zusammenklappbare Polster tragenden Gestells (100) nach Zusammenklappen des Polsters und Herunterklappen der Rückenlehne (12) auf das Sitzkissen (11) praktisch mit der oberen Ebene (H) des Bodens bündig ist.

10. Anordnung nach Anspruch 9, bei der die Rückenlehne (12) des Sitzes am Boden angelenkt und bezüglich diesem schwenkbar ist und das zusammenklappbare Polster (20) trägt.

11. Anordnung nach Anspruch 9, bei der die Rückenlehne (12) des Sitzes am Sitzkissen angelenkt und bezüglich des Bodens (P) schwenkbar ist, wobei das Sitzkissen das zusammenklappbare Polster (20) trägt.
